# EUROPEAN PATENT APPLICATION

(11) **EP 4 502 017 A1**
(43) Date of publication of application: **05.02.2025**
(21) Application number: 23774244.0
(22) Date of filing: 31.01.2023
(51) Int. Cl.: C08J 5/04, B29C 43/20, B29C 43/34, B29C 43/58, B29C 70/16, B29C 70/34

(54) **FIBER-REINFORCED RESIN STRUCTURE AND METHOD FOR PRODUCING FIBER-REINFORCED RESIN STRUCTURE**

(30) Priority: 24.03.2022 JP 2022048040
(71) Applicant: Toray Industries, Inc., Tokyo 103-8666 (JP)
(72) Inventor: SUZUKI, Yuya, Iyo-gun, Ehime 791-3193 (JP); NAKAYAMA, Yoshifumi, Iyo-gun, Ehime 791-3193 (JP); HONMA, Masato, Iyo-gun, Ehime 791-3193 (JP)
(74) Representative: Kador & Partner Part mbB
(86) International application number: PCT/JP2023/003030
(87) International publication number: WO 2023/181645

(57) **Abstract**

According to the present invention, a fiber-reinforced resin structure, which is light in weight and has excellent mechanical characteristics, can maintain good surface quality. The present invention provides a fiber-reinforced resin structure which is obtained by integrating a void body (I) that is composed of reinforcing fibers (A1) and a thermoplastic resin (B1) with a surface layer (II) that is composed of reinforcing fibers (A2) and a thermoplastic resin (B2), wherein: the melting point Tc (°C) of the thermoplastic resin (B1) and the melting point Ts (°C) of the thermoplastic resin (B2) are both 230°C or higher; and Tc (°C) and Ts (°C) satisfy (Tc - Ts) ≥ 20 (°C) or (Ts - Tc) ≥ 20 (°C).

## Description

### TECHNICAL FIELD

The present invention relates to a fiber reinforced resin structure formed by using a base material that includes reinforcing fibers impregnated with thermoplastic resin and also relates to a method for producing such a fiber reinforced resin structure.

### BACKGROUND ART

In recent years, there are increasingly stronger market demands for lightweight industrial products such as automobiles, aircraft, sport goods, and electronic instruments. In order to meet these demands, porous structure materials that are very lightweight and have excellent mechanical characteristics are now in wide use for various industrial applications. However, porous structures alone cannot sufficiently meet market requirements for properties such as bending rigidity and compressive strength. Therefore, techniques for reinforcing and stiffening porous structures by overlaying them with skin layers have been actively studied. For example, Patent document 1 and Patent document 2 disclose sandwich structures each including a porous structure as core member and a skin layer that covers its surface.

Patent document 1 proposes a technique of forming a core member and a skin layer from a mat made of reinforcing fibers and a sheet-like intermediate material made of thermoplastic resin. It is also described that the sheet-like intermediate material used for the core member has heat-expandability so that it can be molded into a porous structure. Patent document 1 proposes the use of a core member and a skin layer that are made of thermoplastic resins having service temperature ranges that overlap each other so that the thermoplastic resins used in the core member and skin member can flow together to allow an anchoring structure to form at the interface, thereby ensuring enhanced bonding strength between the core member and the skin member.

Patent document 2 proposes the use of a core member made of a composite material formed by adhering randomly dispersed discontinuous fibers with a thermoplastic resin while using a skin layer made of a composite material formed by impregnating continuous reinforcing fibers with a thermoplastic resin. It is also described that the core member is expanded by heating to form a porous structure. Patent document 2 proposes the use of a core member and a skin layer made of different thermoplastic resins that are compatible with each other so that the core member and the skin layer can be bonded by melting simultaneously the thermoplastic resins in the core member and the skin layer in a compatibilized manner, thereby avoiding separation between the core member and the skin layer.

### PRIOR ART DOCUMENTS

### PATENT DOCUMENTS

Patent document 1: International Publication WO 2014/162873
Patent document 2: International Publication WO 2018/199091

### SUMMARY OF INVENTION

### PROBLEMS TO BE SOLVED BY THE INVENTION

However, the sandwich structures disclosed in Patent document 1 and Patent document 2 are disadvantageous because the surface of the skin layer tend to suffer scratches and scuffs as the skin layer flows under stress generated by expansion of the core material.

Thus, the present invention was made in view of the above problems, and the main object thereof is to provide a fiber reinforced resin structure that is lightweight, has excellent mechanical characteristics, and can maintain good surface quality.

### MEANS OF SOLVING THE PROBLEMS

The present invention, which is intended to solve the above problems, is as described below. It is a fiber reinforced resin structure in the form of an integration of a void-containing body (I) including reinforcing fibers (A1) and a thermoplastic resin (B1) and a skin layer (II) including reinforcing fibers (A2) and a thermoplastic resin (B2), wherein both the melting point Tc (°C) of the thermoplastic resin (B1) and the melting point Ts (°C) of the thermoplastic resin (B2) are 230°C or more while Ts-Tc or Tc-Ts, namely, the difference between Tc (°C) and Ts (°C), is 20°C or more.

More specifically, it is as follows.

### [Aspect 1]

A fiber reinforced resin structure in the form of an integration of a void-containing body (I) including reinforcing fibers (A1) and a thermoplastic resin (B1) and a skin layer (II) including reinforcing fibers (A2) and a thermoplastic resin (B2), wherein both the melting point Tc (°C) of the thermoplastic resin (B1) and the melting point Ts (°C) of the thermoplastic resin (B2) are 230°C or more while Ts-Tc, namely, the difference between Tc (°C) and Ts (°C), is 20°C or more.

### [Aspect 2]

A fiber reinforced resin structure in the form of an integration of a void-containing body (I) including reinforcing fibers (A1) and thermoplastic resin (B1) and a skin layer (II) including reinforcing fibers (A2) and thermoplastic resin (B2), wherein both the melting point Tc (°C) of the thermoplastic resin (B1) and the melting point Ts (°C) of the thermoplastic resin (B2) are 230°C or more while Tc-Ts, namely, the difference between Tc (°C) and Ts (°C), is 20°C or more.

### ADVANTAGEOUS EFFECTS OF THE INVENTION

According to the present invention, it is possible to provide a fiber reinforced resin structure that is lightweight, exhibits excellent mechanical characteristics, and has a good surface quality.

### BRIEF DESCRIPTION OF THE DRAWINGS

[Fig. 1] (a) A schematic diagram illustrating a fiber reinforced resin structure according to an embodiment of the present invention, and (b) a schematic diagram illustrating the cross-sectional structure of a void-containing body (I) according to an embodiment of the present invention
[Fig. 2] A diagram illustrating variations in molding temperature and molding pressure during a production process in which Ts - Tc ≥ 20 (°C)
[Fig. 3] A diagram illustrating variations in molding temperature and molding pressure during a production process in which Tc - Ts ≥ 20 (°C)
[Fig. 4] A diagram illustrating variations in molding temperature and molding pressure during autoclave molding in a production process in which Tc - Ts ≥ 20 (°C)
[Fig. 5] A schematic diagram illustrating a fiber reinforced resin structure having a bent portion according to an embodiment of the present invention
[Fig. 6] A schematic diagram illustrating a mold according to an embodiment of the present invention and the shape of a molded product produced therewith
[Fig. 7] A schematic diagram illustrating a mold according to another embodiment of the present invention and the shape of a molded product produced therewith

### DESCRIPTION OF PREFERRED EMBODIMENTS

The inventors of the present invention arrived at the present invention after finding that the aforementioned problems can be solved by specifying the relationship between the melting point of the thermoplastic resin used for the void-containing body (I) and that of the thermoplastic resin used for the skin layer (II). The invention is described in detail below.

The fiber reinforced resin structure according to the present invention (hereinafter occasionally referred to simply as "the structure") is an integrated structure of a void-containing body (I) including reinforcing fibers (A1) and a thermoplastic resin (B1) with a skin layer (II) including reinforcing fibers (A2) and a thermoplastic resin (B2). Specifically, the void-containing body (I) includes the reinforcing fibers (A1) and the thermoplastic resin (B1) while the skin layer (II) includes the reinforcing fibers (A2) and the thermoplastic resin (B2).

The skin layer (II) is only required to be present on at least either surface of the void-containing body (I), but the skin layer (II) may be present on each surface of the void-containing body (I) to form a so-called sandwich structure. The formation of a sandwich structure serves to enhance the elastic modulus and strength of the fiber reinforced resin structure and its symmetrical feature serves to prevent warping from being caused by thermal shrinkage during molding.

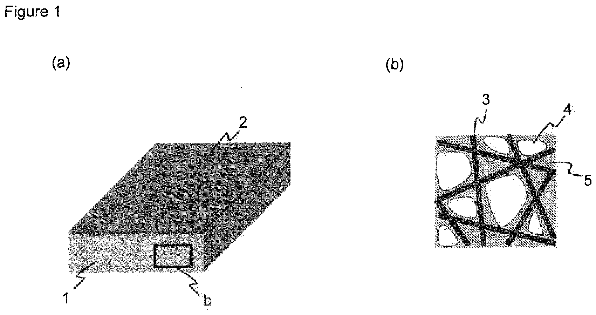

In the structure according to the present invention, the void-containing body (I) has voids. Fig. 1(a) gives a schematic diagram illustrating the fiber reinforced resin structure according to an embodiment of the present invention. Fig. 1(b) gives a schematic cross-sectional diagram illustrating a part of the structure of the void-containing body (I). Typically, the term "void" used for the present invention refers to a void in which neither the reinforcing fibers (A1) nor the thermoplastic resin (B1) are present, which is formed among reinforcing fibers (A1) covered with the thermoplastic resin (B1) and working as columnar supports that may overlap or intersect each other. For example, in the case where the void-containing body (I) is formed by heating a precursor (i) of the void-containing body (I) that includes the reinforcing fibers (A1) impregnated with the thermoplastic resin (B1), voids are formed as the reinforcing fibers (A1) are napped due to melting or softening of the heated thermoplastic resin (B1). This occurs due to its inclination to be napped under napping force that is attributed to the elasticity of the reinforcing fibers (A1) compressed by pressure in the precursor (i) of the void-containing body (I). From the perspective of the expansion rate, it is preferable here for the orientation angle of the reinforcing fibers (A1) in the thickness direction to be 1° or more, more preferably 3° or more.

It is preferable for the void-containing body (I) to have a void fraction of 10 vol% or more and 90 vol% or less. If the void fraction is 10 vol% or more, it is preferable because the density of the void-containing body (I) decreases to meet lightness requirement. On the other hand, if the void fraction is 90 vol% or less, it is preferable because it ensures that the thermoplastic resin (B1) covering the reinforcing fibers (A1) is thick enough to realize sufficient reinforcement by the reinforcing fibers (A1) in the void-containing body (I), leading to good mechanical characteristics.

For the present invention, the reinforcing fibers (A1) used in the void-containing body (I) are discontinuous fibers in typical cases. Here, discontinuous fibers to use for the present invention are preferably reinforcing fibers having fiber lengths of 1 mm or more and 15 mm or less. If the reinforcing fibers (A1) are discontinuous fibers, it allows voids to be formed easily by napping as described above. If the fiber length of the reinforcing fibers (A1) is less than 1 mm, it is not preferable because the formation of voids may not occur efficiently. To measure the fiber length of reinforcing fibers, good methods include, for example, directly extracting some reinforcing fibers from a group of reinforcing fibers, followed by taking measurements based on observations under a microscope. In the case where the group of reinforcing fibers has resin attached thereon, a good method is dissolving the resin with a solvent that dissolves only the resin existing among the group of reinforcing fibers, followed by filtering the remaining reinforcing fibers and taking measurements based on observations under a microscope (dissolution method). In the case where there is no appropriate solvent that can dissolve the resin, a good method is burning off only the resin in a temperature range where the reinforcing fibers do not suffer a weight loss due to oxidization, followed by separating the reinforcing fibers and taking measurements based on observations under a microscope (burn-off method). It is also preferable for the reinforcing fibers (A1) to be substantially in the form of monofilaments that are in a randomly dispersed state in the void-containing body (I). Here, the expression "substantially in the form of monofilaments" means that they are in the form of low-fineness strands each containing less than 500 single reinforcing fibers. It is more preferable that they are monofilaments, that is, in the form of dispersed single fibers. If the reinforcing fibers are substantially in the form of monofilaments, there are less numbers of reinforcing fibers (A) that are in the form of fiber bundles to minimize the number of weak portions located at the ends of bundles of the reinforcing fibers (A), thereby not only leading to higher reinforcing efficiency and reliability but also serving to develop isotropy. If they are in a randomly dispersed state, it serves to further increase the isotropy.

On the other hand, there are no particular limitations on the reinforcing fibers (A2) to use for the skin layer (II), but they are preferably continuous fibers. Here, the term "continuous fibers" refers to reinforcing fibers that are continuous in at least over lengths of 100 mm or more in one direction. Examples of fibers that are in the form of continuous fibers include, for example, fiber fabrics made of reinforcing fiber bundles containing large numbers of continuous fibers, and unidirectional continuous fibers containing large numbers of continuous fibers that are aligned in one direction. In particular, from the perspective of enhancing the effect of reinforcing molded articles, it is preferable to use unidirectional continuous fibers. However, when a molded article having a complex shape is to be formed, it is preferable to adopt a fiber fabric that is high in shapeability.

There are no particular restrictions on the types of the reinforcing fibers (A1) and the reinforcing fibers (A2) to use, and examples include metal fibers such as aluminum fiber, brass fiber, and stainless steel fiber; carbon fibers (including graphite fibers) such as polyacrylonitrile (PAN) based carbon fiber rayon based carbon fiber, lignin based carbon fiber, and pitch based carbon fiber; insulation fibers such as glass fiber; organic fibers such as aramid fiber, poly(p-phenylene benzoxazole) (PBO) fiber, polyphenylene sulfide fiber, polyester fiber, acrylic fiber, nylon fiber, and polyethylene fiber; and inorganic fibers such as silicon carbide fiber and silicon nitride fiber. Furthermore, these fibers may be surface-treated. Useful surface treatment methods include deposition of metal, i.e., a conductive material, treatment with a coupling agent, treatment with a sizing agent, treatment with a binding agent, and attachment of an additive. Furthermore, these different types of fibers may be used singly or may be used as a combination of two or more thereof.

From the perspective of weight reduction, carbon fibers such as PAN based carbon fiber, pitch based carbon fiber, and rayon based carbon fiber are used favorably because they have high specific strength and high specific rigidity, and in particular, PAN based carbon fiber is used favorably due to their good mechanical characteristics such as strength and elastic modulus. In addition, in order to produce molded products with enhanced economical efficiency, the use of glass fiber is favored, and the combined use of carbon fiber and glass fiber is particularly favored from the perspective of the balance between mechanical characteristics and economical features. Furthermore, in order to produce molded products with enhanced impact absorptivity and shapeability, the use of aramid fiber is favored, and the combined use of carbon fiber and aramid fiber is particularly favored from the perspective of the balance between mechanical characteristics and impact absorptivity. **In** addition, in order to produce molded products with enhanced electric conductivity, reinforcing fibers coated with metal such as nickel, copper, and ytterbium may be used.

As the carbon fiber, furthermore, recycled carbon fibers obtainable by recycling carbon fiber reinforced plastics containing carbon fiber and matrix resin may be used. Matrix resin is removed by a recycling technique such as atmospheric pressure dissolution, subcritical decomposition, supercritical decomposition, electrolysis, pyrolysis, and superheated steam treatment.

From the perspective of the rigidity of the fiber reinforced resin structure, the tensile modulus of the reinforcing fibers (A1) contained in the void-containing body (I) is preferably in the range of 200 GPa or more and 1,000 GPa or less, more preferably 220 GPa or more and 500 GPa or less. If the tensile modulus of the reinforcing fibers is less than 200 GPa, it is likely to lead to a fiber reinforced resin structure with poor rigidity, whereas if it is more than 1,000 GPa, it is necessary for the reinforcing fibers to have increased crystallinity, although it is difficult to produce such reinforcing fibers. If the tensile modulus of the discontinuous reinforcing fibers used is within the aforementioned range, it is preferable from the perspective of the rigidity of the fiber reinforced resin structure and the manufacturability of the reinforcing fibers. Here, the tensile modulus of the reinforcing fibers can be determined according to the tensile test of strands specified in JIS R7601 (1986).

For the present invention, the melting point Tc of the thermoplastic resin (B1) and the melting point Ts of the thermoplastic resin (B2) are both 230°C or more. Examples of crystalline thermoplastic resins having such melting points include polyamide (PA), polyphenylene sulfide (PPS), polyether ketone (PEK), polyaryl ether ketones (PAEK) such as polyether ether ketone (PEEK), and polyether ketone ketone (PEKK). In particular, from the perspective of continuous service temperature, it is preferable that the glass transition temperatures of the thermoplastic resin (B1) and thermoplastic resin (B2) are both 120°C or more. Preferable examples of thermoplastic resins having such glass transition temperatures include polyaryl ether ketone and polyaryl ether ketone copolymers, and also preferable are compounds selected from polyether ether ketone and polyether ketone ketone. Furthermore, it is preferable that either of the melting points Tc and Ts is 270°C or more and 330°C or less. If their melting points are in this range, it enables the production of a fiber reinforced resin structure that is highly heat resistant and easy to mold because required molding temperatures are not excessively high. When using a thermoplastic resin having a high melting point, molding is often performed near the melting point of the thermoplastic resin in consideration of the heating capacity of the molding die in use. Accordingly, high pressure molding of material in a high viscosity state is inevitable in many cases, where the material tends to suffer deterioration in surface quality as the entire material flows during molding. In the case of the present invention, the void-containing body (I) and the skin layer (II) can flow separately, and therefore, the effect of improving surface quality is notably achieved when using a resin with a high melting point. In addition, the use of a thermoplastic resin having a high melting point serves to produce a structure that is more suitable for use at high temperatures. The thermoplastic resin (B1) and thermoplastic resin (B2) described above may contain impact resistance improving agents such as elastomers and rubber components and other fillers and additives as long as the objects of the present invention are not impaired. Examples of such fillers and additives include inorganic fillers, flame retardants, electric conductivity developing agents, crystal nucleating agents, ultraviolet light absorbers, antioxidants, vibration damping agents, antibacterial agent, insecticides, deodorants, coloring prevention agents, thermal stabilizers, mold releasing agents, antistatic agents, plasticizers, lubricants, coloring agents, pigments, dyes, foaming agents, bubble control agents, and coupling agents.

Furthermore, for the present invention, the difference between Tc (°C) and Ts (°C) is 20°C or more. A fiber reinforced resin structure satisfying this requirement can be molded by solidifying either the void-containing body (I) or the skin layer (II) while softening the other during the production process. This prevents the entire structure to flow as one body, thereby enabling the production of a structure with good surface appearance. The melting point of the thermoplastic resin according to the present invention is measured according to JIS K7120 (1987). The melting point of resins varies depending on additives and molecular weight distribution, and therefore cannot be uniformly specified, but suitable resin combinations to meet the aforementioned melting point relationship include polyamide and polyphenylene sulfide, polyamide and polyether ketone ketone, polyamide and polyether ether ketone, polyphenylene sulfide and polyether ketone ketone, polyphenylene sulfide and polyether ether ketone, polyether ketone ketone and polyether ether ketone, etc.

The use of such combinations of thermoplastic resins (B1) and thermoplastic resins (B2) serves to solidify either the void-containing body (I) or the skin layer (II) while melting or softening the other so that only the portion that is in a molten or softened state can be molded. Therefore, the structure according to the present invention can maintain a skin layer (II) having a high quality surface without post-processing after molding, making it possible to allow the aforementioned skin layer (II) to have an average surface roughness Ra of 10 µm or less as measured according to JIS B 0601 (2001). From the perspective of surface quality, the average surface roughness is more preferably 5 µm or less, and still more preferably 1 µm or less.

In this case, furthermore, to enable the molding of only either the void-containing body (I) or the skin layer (II), it is preferable that the thermoplastic resin (B1) in the void-containing body (I) and the thermoplastic resin (B2) in the skin layer (II) forms a boundary plane between them instead of melting and mixing together.

The thicknesses of the void-containing body (I) and the skin layer (II) preferably have a Hc/Hs ratio of 5 or more where Hc is the thickness of the void-containing body (I) while Hs is the thickness of the skin layer (II). An increase in the proportion of the void-containing body (I) in the fiber reinforced resin structure serves to produce a lightweight molded product.

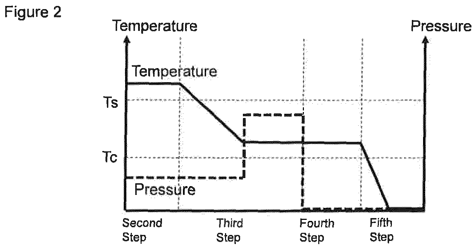

In the case where the melting point Tc of the thermoplastic resin (B1) present in the void-containing body (I) is lower by 20°C or more than the melting point Ts of the thermoplastic resin (B2) present in the skin layer (II) (Ts - Tc ≥ 20°C), the molding temperature and the molding pressure are varied as illustrated in Fig. 2 and the production of the aforementioned fiber reinforced resin structure is carried out as follows:
step 1 for combining
   - a precursor (i) of a void-containing body (I) that includes a nonwoven fabric of reinforcing fibers (A1) and a thermoplastic resin (B1), and
   - a prepreg that includes reinforcing fibers (A2) and a thermoplastic resin (B2),
   and placing it in a mold;
step 2 for heating and melting both the thermoplastic resin (B1) and the thermoplastic resin (B2) at a temperature higher than Ts to join together and shape the precursor (i) of the void-containing body (I) and the skin layer (II);
step 3 for cooling to a temperature higher than Tc and lower than Ts to solidify the skin layer (II);
step 4 for, while maintaining a temperature higher than Tc and lower than Ts, releasing the pressure to expand the precursor (i) of the void-containing body (I); and
step 5 for cooling to a temperature lower than Tc to solidify the void-containing body (I);
thereby completing the production of the fiber reinforced resin structure according to the present invention. This method serves to cure the skin layer (II) first in the step 3 and then allow the precursor of the void-containing body (I) to expand in the step 4, thereby making it possible to prevent the formation of defects in surface quality such as scuffs in the skin layer (II) from being caused by the flow of the thermoplastic resin (B1) being expanded.

Here, the precursor of the void-containing body (I) to use may be in the form of either a laminated sheet including a nonwoven fabric of the reinforcing fibers (A1) and the thermoplastic resin (B1) or a base sheet formed by impregnating a nonwoven fabric of the reinforcing fibers (A1) with the thermoplastic resin (B1). If a laminated sheet including a nonwoven fabric of the reinforcing fibers (A1) and a thermoplastic resin (B1) is used as the precursor of the void-containing body (I), it is preferable that an impregnation operation of applying a pressure to impregnate the reinforcing fibers (A1) with the thermoplastic resin (B1) is performed at a point before the step 4, preferably following the step 3.

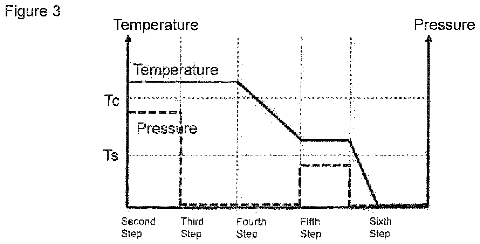

In the case where the melting point Tc of the thermoplastic resin (B1) present in the void-containing body (I) is higher by 20°C or more than the melting point Ts of the thermoplastic resin (B2) present in the skin layer (II) (Tc - Ts ≥ 20°C), the molding temperature and the molding pressure should be varied as illustrated in Fig.3, and after performing the step 1, the rest of the production process is carried out as follows:
step 2 for heating and melting both the thermoplastic resin (B1) and the thermoplastic resin (B2) at a temperature higher than Tc to join together the precursor (i) of the void-containing body (I) and the skin layer (II);
step 3 for, while maintaining a temperature higher than Tc, releasing the pressure to expand the precursor (i) of the void-containing body (I);
step 4 for cooling to a temperature higher than Ts and lower than Tc to solidify the expanded void-containing body (I);
step 5 for, while maintaining a temperature higher than Ts and lower than Tc, applying a pressure to cause the skin layer (II) to flow; and
step 6 for cooling to a temperature lower than Ts to solidify the skin layer (II);
thereby completing the production of the fiber reinforced resin structure according to the present invention. In the step 5, it is preferable to apply a pressure smaller than the compressive strength of the solidified void-containing body (I) because this prevents the destruction of the structure of the void-containing body (I). If this method is adopted, the surface of the skin layer (II) is in a roughened state due to the expansion of the void-containing body (I) at end of the step 3 in which the void-containing body (I) is expanded. However, since the void-containing body (I) does not flow during the fluidization of the skin layer (II) in the subsequent step 5, the surface can be smoothed in a state where the skin layer (II) can flow stably, thereby preventing defects in surface quality such as scuffs.

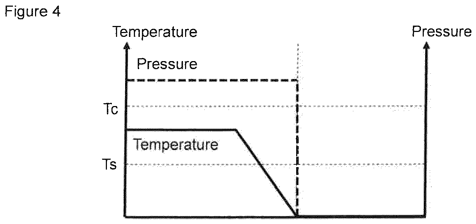

Furthermore, in the case where the melting point Tc of the thermoplastic resin (B1) present in the void-containing body (I) is higher by 20°C or more than the melting point Ts of the thermoplastic resin (B2) present in the skin layer (II) (Tc - Ts ≥ 20°C), the fiber reinforced resin structure according to the present invention can be produced by a procedure in which the void-containing body (I) and the skin layer (II) are combined into a layered structure, followed by heating and pressing it in an autoclave at a temperature lower than Tc and higher than Ts, as shown in the molding temperature and molding pressure transition diagram in Fig. 4. Since the void-containing body (I) is not melted, its surface can be smoothed in a state where the skin layer (II) can flow stably, thereby preventing defects in surface quality such as scuffs.

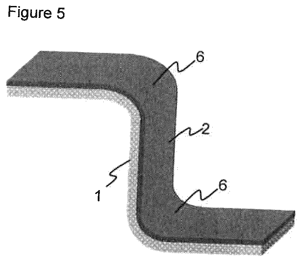

In addition, the skin layer (II) may have a bent portion. Fig. 5 gives schematic diagram illustrating a fiber reinforced resin structure according to an embodiment of the present invention, in which the skin layer (II) has bent portions. In this embodiment, the structure that includes the skin layer (II) 2 and the void-containing body (I) 1 has a plate-like body with a constant thickness, and this plate-like body is shaped into a bent form with two bent portions. The skin layer (II) has two bent portions 6 where it is bent by approximately 90° to conform to the bent shape. Here, for the present invention, a bent portion means a shape with a curved surface, such as the shape of a molded body having a cross-sectional shape that is a part of a circle or ellipse. Since molding pressure tends to concentrate at bent portions, scratches and scuffs are likely to occur on the surface of the skin layer. Accordingly, the effect according to the present invention, i.e., prevention of scratches and scuffs on the surface of the skin layer, can be made more noticeable.

### EXAMPLES

The present invention will be described in more detail below with reference to examples.

### <Methods for measuring physical properties>

### (1) Measurement of melting points of thermoplastic resins (B1 and B2)

The melting points and glass transition temperatures of the thermoplastic resin (B1) and the thermoplastic resin (B2) used to impregnate fiber reinforced resin structures were evaluated as follows. The melting points and glass transition temperatures were measured in accordance with "Testing Methods for Transition Temperatures of Plastics" specified in JIS K7121 (1987). A sheet or non-woven fabric used in the production of the fiber reinforced resin structure was dried for 24 hours or more in a vacuum dryer controlled at an oven temperature of 50°C, then finely cut to prepare a test sample. The melting point of the sample was measured using a differential scanning calorimeter (DSC 200F3 Maia, manufactured by NETZSCH) according to the standard specified above.

### (2) Measurement of void fraction of fiber reinforced resin structure

A test piece having a length of 10 mm and a width of 10 mm was cut out from a flat part of the fiber reinforced resin structure, and the cross section was observed under a scanning electron microscope (SEM) (Model S-4800, manufactured by Hitachi High-Technologies Corporation). Ten positions aligned at equal intervals on the surface of the structure were photographed at a magnification of 1,000 times. In each of the images, the area of the voids was measured. Then, the void fraction was calculated by dividing the area of the voids by the total area of the image. Five test pieces were prepared and 10 positions in each test piece were photographed, and the volume content of the voids in the structure was calculated from the arithmetic average of the void fraction measured at a total of 50 positions.

### (3) Measurement of boundary interface between void-containing body and skin layer in fiber reinforced resin structure, thickness of void-containing body, and thickness of skin layer

A test piece having a length of 10 mm and a width of 10 mm was cut out from a flat part of the fiber reinforced resin structure, and the cross section was observed under a scanning electron microscope (SEM) (Model S-4800, manufactured by Hitachi High-Technologies Corporation) to examine the resin boundary and thickness. The thickness was determined from the arithmetic average of thickness measurements taken at five positions selected at random.

### (4) Measurement of bending strength of fiber reinforced resin structure

A test piece having a length of 10 mm and a width of 10 mm was cut out from a flat part of the fiber reinforced resin structure, and a four-point bending test was conducted in accordance with JIS K7017 (1999) to determine the bending strength.

### (5) Surface roughness Ra of skin layer (II)

Using a surface roughness meter, an appropriate cutoff value and reference length were set up and the surface roughness Ra of the bent portions in the skin layer was determined according to JIS B 0601 (2001).

### <Materials>

### [Carbon fiber]

A continuous carbon fiber bundle containing a total of 12,000 filaments was prepared by spinning a polymer containing polyacrylonitrile as primary component and calcining it. Then, the continuous carbon fiber bundle was subjected to electrolytic surface treatment and dried in heated air at 120°C to prepare reinforcing fibers I. This carbon fiber sample had characteristics as shown below.
Density: 1.80 g/cm³
Monofilament diameter: 7 µm
Tensile strength: 4.9 GPa
Tensile elastic modulus: 230 GPa

### [6 mm mat]

Reinforcing fibers were cut to 6 mm using a cartridge cutter to prepare chopped reinforcing fiber samples. Then, 40 liters of a dispersion medium solution consisting of water and a surface active agent (Polyoxyethylene Lauryl Ether (trade name), manufactured by Nacalai Tesque, Inc.) with a concentration of 0.1 wt% was prepared and introduced into a papermaking machine. The papermaking machine had an upper papermaking tank (with a capacity of 30 liters) equipped with a stirrer with a rotating blade and a lower water storage tank (with a capacity of 10 liters), along with a porous support placed between the papermaking tank and the water storage tank. First, this dispersion medium solution was stirred in a stirring machine until minute air bubbles began to form. Then, a chopped reinforcing fiber sample with a weight adjusted to achieve a desired basis weight was added to the dispersion medium solution containing dispersed minute air bubbles and stirred to provide a slurry containing dispersed reinforcing fibers. Subsequently, the slurry was absorbed from the water storage tank and dehydrated through the porous support to form a reinforcing fiber paper sheet. This paper sheet was dried in a hot air dryer at 150°C for 2 hours to provide a reinforcing fiber mat.

### [PA66 sheet]

A resin sheet of a nylon 66 resin (Amilan (registered trademark) CM3006, manufactured by Toray Industries, Inc.) with a basis weight of 100 g/m² was prepared.

### [PPS sheet]

A resin sheet of polyphenylene sulfide resin (Torelina (registered trademark) M2888, manufactured by Toray Industries, Inc.) with a basis weight of 100 g/m² was prepared.

### [PEKK sheet (α)]

A resin sheet of a polyether ketone ketone resin (Kepstan (registered trademark) 6003, manufactured by Arkema Ltd.) with a basis weight of 100 g/m² was prepared.

### [PEKK sheet (β)]

A resin sheet of a polyether ketone ketone resin (Kepstan (registered trademark) 8003, manufactured by Arkema Ltd.) with a basis weight of 100 g/m² was prepared.

### [PEEK sheet]

A resin sheet of a polyether ether ketone resin (PEEK 381G, manufactured by Victrex Japan Inc.) with a basis weight of 100 g/m² was prepared.

### [PA66 prepreg]

Carbon fibers were opened and paralleled so that they were aligned in one direction with a density of 1.4 filaments/cm to form a sheet-like group of reinforcing fibers. A PA66 sheet was put on top of the reinforcing fiber group and impregnation was carried out by applying a surface pressure of 10 MPa with a press heated at 280°C to provide a PA66 prepreg.

### [PPS prepreg]

Carbon fibers were opened and paralleled so that they were aligned in one direction with a density of 1.4 fibers/cm to form a sheet-like group of reinforcing fibers. A PPS sheet was put on top of the reinforcing fiber group and impregnation was carried out by applying a surface pressure of 10 MPa with a press heated at 300°C to provide a PSS prepreg.

### [PEKK Prepreg (α)]

Carbon fibers were opened and paralleled so that they were aligned in one direction with a density of 1.4 fibers/cm to form a sheet-like group of reinforcing fibers. A PEKK sheet (α) was put on top of the reinforcing fiber group and impregnation was carried out by applying a surface pressure of 10 MPa with a press heated at 330°C to provide a PEKK prepreg (α).

### [PEKK prepreg (β)]

Carbon fibers were opened and paralleled so that they were aligned in one direction with a density of 1.4 fibers/cm to form a sheet-like group of reinforcing fibers. A PEKK sheet (β) was put on top of the reinforcing fiber group and impregnation was carried out by applying a surface pressure of 10 MPa with a press heated at 380°C to provide a PEKK prepreg (β).

### [PEEK prepreg]

Carbon fibers were opened and paralleled so that they were aligned in one direction with a density of 1.4 fibers/cm to form a sheet-like group of reinforcing fibers. A PEEK sheet was put on top of the reinforcing fiber group and impregnation was carried out by applying a surface pressure of 10 MPa with a press heated at 360°C to provide a PEEK prepreg.

### (Example 1: where Ts - Tc ≥ 20°C)

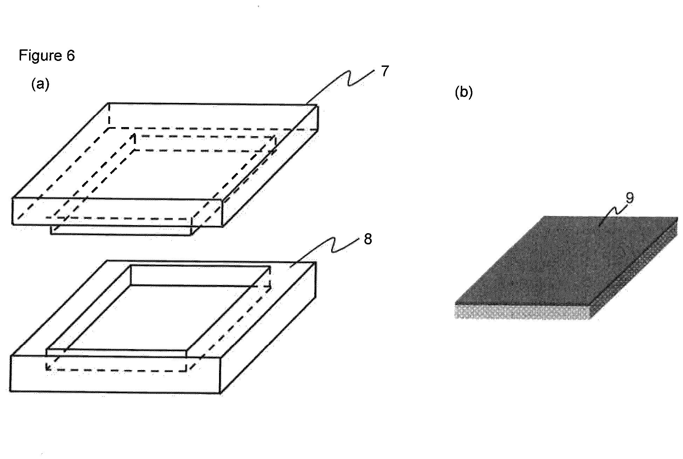

A 6 mm mat was used as the reinforcing fiber (A1); a PA66 sheet was used as the thermoplastic resin (B1); and a PPS prepreg was used as the skin layer (II). A fiber reinforced resin structure was prepared through a process carried out under the following molding conditions. Fig. 6(a) gives a schematic diagram of a die for press molding having curved portions, and Fig. 6(b) gives an overview of the fiber reinforced resin structure having a shape P that is obtainable by using the die. The die has flat parts with a size of 300 mm in length and 200 mm in width that face each other, and the average surface roughness of the die surface is 0.2 µm.

(Step 1) A laminated precursor is prepared as a stack consisting of [skin layer (II) / thermoplastic resin (B1) / reinforcing fiber (A1) / thermoplastic resin (B1) / reinforcing fiber (A1) / thermoplastic resin (B1)] stacked in this order. This laminated precursor is placed in the cavity of a press molding die having a bent portion preheated at 300°C and then the die is closed.

(Step 2) Then, it is maintained for 120 seconds.

(Step 3) It is cooled to 280°C, and a pressure of 5 MPa is applied and maintained for an additional 60 seconds.

(Step 4) The die cavity is opened, and a metal spacer is inserted into the end thereof and adjusted so that an expansion ratio of 3 is maintained during the production of a fiber reinforced resin structure.

(Step 5) Subsequently, the die cavity is closed again, and while maintaining the pressure, the cavity temperature is decreased to 50°C, followed by opening the die and taking out the fiber reinforced resin structure.

Characteristics of the resulting fiber reinforced resin structure are shown in Table 1.

### (Example 2: where Tc - Ts ≥ 20°C)

A 6 mm mat was used as the reinforcing fiber (A1); a PPS sheet was used as the thermoplastic resin (B1); and a PA66 prepreg was used as the skin layer (II). A fiber reinforced resin structure was prepared through a process carried out under the following press molding conditions.

(Step 1) A laminated precursor is prepared as a stack consisting of [skin layer (II) / reinforcing fiber (A1) / thermoplastic resin (B1) / reinforcing fiber (A1) / thermoplastic resin (B1) / reinforcing fiber (A1)] stacked in this order. This laminated precursor is placed in the cavity of a press molding die preheated at 300°C and then the die is closed.

(Step 2) Then, it is maintained for 120 seconds, and while keeping the temperature at 300°C, a pressure of 10 MPa is applied and maintained for an additional 60 seconds.

(Step 3) The die cavity is opened, and a metal spacer is inserted into the end thereof and adjusted so that an expansion ratio of 3 is maintained during the production of a fiber reinforced resin structure.

(Step 4) Subsequently, the die cavity is closed again, and while maintaining the pressure, the cavity temperature is decreased to 280°C.

(Step 5) Then, a pressure of 0.5 MPa is applied to push the fiber reinforced resin structure 0.2 mm into the die.

(Step 6) The temperature is decreased to 50°C, followed by opening the die and taking out the fiber reinforced resin structure.

Characteristics of the resulting fiber reinforced resin structure are shown in Table 1.

### (Example 3: where Ts - Tc ≥ 20°C)

A 6 mm mat was used as the reinforcing fiber (A1); a PPS sheet was used as the thermoplastic resin (B1); and a PEKK prepreg was used as the skin layer (II). A fiber reinforced resin structure was prepared through a process carried out under the following press molding conditions.

(Step 1) A laminated precursor is prepared as a stack consisting of [skin layer (II) / thermoplastic resin (B1) / reinforcing fiber (A1) / thermoplastic resin (B1) / reinforcing fiber (A1) / thermoplastic resin (B1)] stacked in this order. This laminated precursor is placed in the cavity of a press molding die preheated at 330°C and then the die is closed.

(Step 2) Then, it is maintained for 120 seconds.

(Step 3) It is cooled to 300°C, and a pressure of 8 MPa is applied and maintained for an additional 60 seconds.

(Step 4) The die cavity is opened, and a metal spacer is inserted into the end thereof and adjusted so that an expansion ratio of 3 is maintained during the production of a fiber reinforced resin structure.

(Step 5) Subsequently, the die cavity is closed again, and while maintaining the pressure, the cavity temperature is decreased to 50°C, followed by opening the die and taking out the fiber reinforced resin structure.

Characteristics of the resulting fiber reinforced resin structure are shown in Table 1.

### (Example 4: where Ts - Tc ≥ 20°C)

A 6 mm mat was used as the reinforcing fiber (A1); a PEKK sheet was used as the thermoplastic resin (B1); and a PEEK prepreg was used as the skin layer (II). A fiber reinforced resin structure was prepared through a process carried out under the following press molding conditions.

(Step 1) A laminated precursor is prepared as a stack consisting of [skin layer (II) / thermoplastic resin (B1) / reinforcing fiber (A1) / thermoplastic resin (B1) / reinforcing fiber (A1) / thermoplastic resin (B1)] stacked in this order. This laminated precursor is placed in the cavity of a press molding die preheated at 380°C and then the die is closed.

(Step 2) Then, it is maintained for 120 seconds.

(Step 3) It is cooled to 330°C, and a pressure of 10 MPa is applied and maintained for an additional 60 seconds.

(Step 4) The die cavity is opened, and a metal spacer is inserted into the end thereof and adjusted so that an expansion ratio of 3 is maintained during the production of a fiber reinforced resin structure.

(Step 5) Subsequently, the die cavity is closed again, and while maintaining the pressure, the cavity temperature is decreased to 50°C, followed by opening the die and taking out the fiber reinforced resin structure.

Characteristics of the resulting fiber reinforced resin structure are shown in Table 1.

### (Example 5: where Tc - Ts ≥ 20°C)

A 6 mm mat was used as the reinforcing fiber (A1); a PEEK sheet was used as the thermoplastic resin (B1); and a PEKK prepreg was used as the skin layer (II). A fiber reinforced resin structure was prepared through a process carried out under the following press molding conditions.

(Step 1) A laminated precursor is prepared as a stack consisting of [skin layer (II) / reinforcing fiber (A1) / thermoplastic resin (B1) / reinforcing fiber (A1) / thermoplastic resin (B1) / reinforcing fiber (A1)] stacked in this order. This laminated precursor is placed in the cavity of a press molding die preheated at 380°C and then the die is closed.

(Step 2) Then, it is maintained for 120 seconds, and while keeping the temperature at 380°C, a pressure of 10 MPa is applied and maintained for an additional 60 seconds.

(Step 3) The die cavity is opened, and a metal spacer is inserted into the end thereof and adjusted so that an expansion ratio of 3 is maintained during the production of a fiber reinforced resin structure.

(Step 4) Subsequently, the die cavity is closed again, and while maintaining the pressure, the cavity temperature is decreased to 330°C.

(Step 5) Then, a pressure of 0.5 MPa is applied to push the fiber reinforced resin structure 0.2 mm into the die.

(Step 6) The temperature is decreased to 50°C, followed by opening the die and taking out the fiber reinforced resin structure.

Characteristics of the resulting fiber reinforced resin structure are shown in Table 1.

### (Example 6: where Tc - Ts ≥ 20°C)

A fiber reinforced resin structure was prepared in the same way as in Example 5.

About 0.4 mm surface layer was removed from the surface of the resulting fiber reinforced resin structure that faced the void-containing structure in such a manner that the ratio Hc/Hs between the thickness of the void-containing body (Hc) and the thickness of the skin layer (Hs) would be 3.

Characteristics of the resulting fiber reinforced resin structure are shown in Table 1.

### (Example 7: where Ts - Tc ≥ 20°C)

Except that a metal spacer was inserted so that the expansion ratio in producing the fiber reinforced resin structure would be 1.05, the same procedure as in Example 1 was carried out to produce a fiber reinforced resin structure. Characteristics of the resulting fiber reinforced resin structure are shown in Table 1.

### (Example 8: where Ts - Tc ≥ 20°C)

Except that a metal spacer was inserted so that the expansion ratio in producing the fiber reinforced resin structure would be 20, the same procedure as in Example 1 was carried out to produce a fiber reinforced resin structure. The resulting fiber reinforced resin structure is shown in Table 1.

### (Example 9: where Ts - Tc ≥ 20°C)

In Step 1, a laminated precursor was prepared as a stack consisting of [skin layer (II) / thermoplastic resin (B1) / reinforcing fiber (A1) / thermoplastic resin (B1) / reinforcing fiber (A1) / thermoplastic resin (B1) / skin layer (II)] stacked in this order, and except for this, the same procedure as in Example 1 was carried out to produce a fiber reinforced resin structure. The resulting fiber reinforced resin structure is shown in Table 1.

### (Example 10: where Ts - Tc ≥ 20°C)

In Step 1, a laminated precursor is prepared as a stack consisting of [skin layer (II) / thermoplastic resin (B1) / reinforcing fiber (A1) / thermoplastic resin (B1) / reinforcing fiber (A1) / thermoplastic resin (B1) / skin layer (II)] stacked in this order, and except for this, the same procedure as in Example 4 was carried out to produce a fiber reinforced resin structure.

The resulting fiber reinforced resin structure is shown in Table 1.

### (Example 11)

Except for using a press molding die having a cavity designed for forming a bent portion, the same procedure as in Example 1 was carried out to produce a fiber reinforced resin structure.

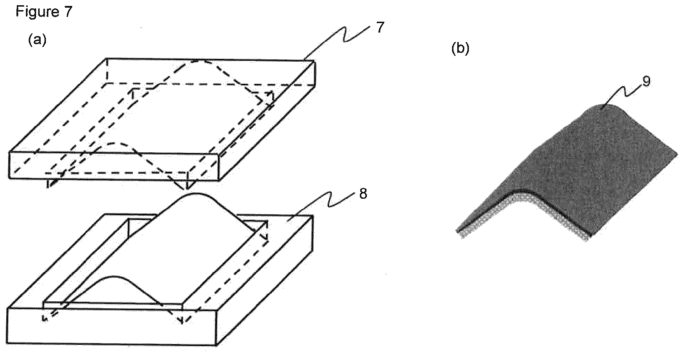

Fig. 7(a) gives a schematic diagram of the press molding die used above, and Fig. 7(b) shows the shape Q of the fiber reinforced resin structure that is obtainable by using the die. The die has flat parts with a size of 300 mm in length and 200 mm in width that face each other and has a bent portion with a curvature radius of 12 mm, and the die surface has an average surface roughness of 0.2 µm. The resulting fiber reinforced resin structure is shown in Table 1. Here, the surface roughness was measured in the bent portion.

### (Example 12)

A 6 mm mat was used as the reinforcing fiber (A1); a PEEK sheet was used as the thermoplastic resin (B1); and a PEKK prepreg was used as the skin layer (II). A fiber reinforced resin structure was prepared through a process carried out under the following molding conditions.

(Step 1) A laminated precursor is prepared as a stack consisting of [reinforcing fiber (A1) / thermoplastic resin (B1) / reinforcing fiber (A1) / thermoplastic resin (B1) / reinforcing fiber (A1)] stacked in this order. This laminated precursor is placed in the cavity of a press molding die preheated at 380°C and then the die is closed.

(Step 2) Then, it is maintained for 120 seconds, and while keeping the temperature at 380°C, a pressure of 10 MPa is applied and maintained for an additional 60 seconds.

(Step 3) The die cavity is opened, and a metal spacer is inserted into the end thereof and adjusted so that an expansion ratio of 3 is maintained during the production of a fiber reinforced resin structure.

(Step 4) Then, a pressure of 0.5 MPa is applied to push the fiber reinforced resin structure 0.2 mm into the die.

(Step 5) The temperature is decreased to 50°C, followed by opening the die and taking out the porous body (I).

(Step 6) A stack consisting of [porous body (I) / skin layer (II)] stacked in this order is produced, and it is heated and pressed at 330°C in an autoclave.

(Step 7) The temperature is decreased to 50°C, followed by opening the die and taking out the fiber reinforced resin structure.

Characteristics of the resulting fiber reinforced resin structure are shown in Table 1.

### (Comparative example 1)

A 6 mm mat was used as the reinforcing fiber (A1); a PPS sheet was used as the thermoplastic resin (B1); and a PPS prepreg was used as the skin layer (II). A fiber reinforced resin structure was prepared through a process carried out under the following press molding conditions.

(Step 1) A laminated precursor is prepared as a stack consisting of [skin layer (II) / thermoplastic resin (B1) / reinforcing fiber (A1) / thermoplastic resin (B1) / reinforcing fiber (A1) / thermoplastic resin (B1)] stacked in this order. This laminated precursor is placed in the cavity of a press molding die preheated at 300°C and then the die is closed.

(Step 2) Then, it is maintained for 120 seconds, and while keeping the temperature at 300°C, a pressure of 8 MPa is applied and maintained for an additional 60 seconds.

(Step 3) The die cavity is opened, and a metal spacer is inserted into the end thereof and adjusted so that an expansion ratio of 3 is maintained during the production of a fiber reinforced resin structure.

(Step 4) Subsequently, the die cavity is closed again, and while maintaining the pressure, the cavity temperature is decreased to 50°C. The die is opened and the fiber reinforced resin structure is taken out.

Characteristics of the resulting fiber reinforced resin structure are shown in Table 1.

### (Comparative example 2)

A 6 mm mat was used as the reinforcing fiber (A1); a PEEK sheet was used as the thermoplastic resin (B1); and a PEKK prepreg (β) was used as the skin layer (II). A fiber reinforced resin structure was prepared through a process carried out under the following press molding conditions.

(Step 1) A laminated precursor is prepared as a stack consisting of [skin layer (II) / thermoplastic resin (B1) / reinforcing fiber (A1) / thermoplastic resin (B1) / reinforcing fiber (A1) / thermoplastic resin (B1)] stacked in this order. This laminated precursor is placed in the cavity of a press molding die preheated at 380°C and then the die is closed.

(Step 2) Then, it is maintained for 120 seconds, and while keeping the temperature at 380°C, a pressure of 10 MPa is applied and maintained for an additional 60 seconds.

(Step 3) It is cooled to 350°C, and a pressure of 10 MPa is applied and maintained for an additional 60 seconds.

(Step 4) The die cavity is opened, and a metal spacer is inserted into the end thereof and adjusted so that an expansion ratio of 3 is maintained during the production of a fiber reinforced resin structure.

(Step 5) Subsequently, the die cavity is closed again, and while maintaining the pressure, the cavity temperature is decreased to 50°C, followed by opening the die and taking out the fiber reinforced resin structure.

Characteristics of the resulting fiber reinforced resin structure are shown in Table 1.

### (Comparative example 3)

Except for using a press molding die having a cavity designed for forming a bent portion, the same procedure as in Comparative example 2 was carried out to produce a fiber reinforced resin structure. Fig. 7(a) gives a schematic diagram of the press molding die used above, and Fig. 7(b) shows the shape Q of the fiber reinforced resin structure that is obtainable by using the die. The die has flat parts with a size of 300 mm in length and 200 mm in width that face each other and has a bent portion with a curvature radius of 12 mm, and the die surface has an average surface roughness of 0.2 µm. The resulting fiber reinforced resin structure is shown in Table 1. Here, the surface roughness was measured in the bent portion.

### [Table 1-1]

**Table 1-1]**

| | | | Example 1 | Example 2 | Example 3 | Example 4 |
|---|---|---|---|---|---|---|
| void-containing body [I] | (A1) | reinforcing fiber | 6 mm mat | 6 mm mat | 6 mm mat | 6 mm mat |
| | (B1) | thermoplastic resin | PA66 sheet | PPS sheet | PPS sheet | PEKK sheet (α) |
| | melting point of (B1), Tc | | 260°C | 285°C | 285°C | 306°C |
| | glass transition temperature of (B1) | | 65°C | 93°C | 93°C | 160°C |
| | void fraction | | 66% | 66% | 66% | 66% |
| skin layer [II] | (A2) | reinforcing fiber | continuous fiber | continuous fiber | continuous fiber | continuous fiber |
| | (B2) | thermoplastic resin | PPS | PA66 | PEKK | PEEK |
| | melting point of (B2), Ts | | 285°C | 260°C | 306°C | 343°C |
| | glass transition temperature of (B2) | | 93°C | 65°C | 160°C | 143°C |
| | type | | PPS prepreg | PA66 prepreg | PEKK prepreg α | PEEK prepreg |
| melting | point difference \|Ts-Tc\| | | 25°C | 25°C | 21°C | 37°C |
| laminated structure | shape of member | | P | P | P | P |
| | thickness ratio between void-containing body and skin layer, Hc/Hs | | 5 | 5 | 5 | 5 |
| | molding method | | press molding | press molding | press molding | press molding |
| | entire specific gravity | | 0.38 | 0.34 | 0.38 | 0.38 |
| | bending strength | | 43 MPa | 31 MPa | 46 MPa | 48 MPa |
| | specific strength | | 113 MPa/(g/cm³) | 91 MPa/(g/cm³) | 121 MPa/(g/cm³) | 126 MPa/(g/cm³) |
| | average surface roughness | | 0.42 µm | 0.63 µm | 0.37 µm | 0.24 µm |
| | | | Example 9 | Example 10 | Example 11 | Example 12 |
| void-containing body [I] | (A1) | reinforcing fiber | 6 mm mat | 6 mm mat | 6 mm mat | 6 mm mat |
| | (B1) | thermoplastic resin | PA66 sheet | PEKK sheet (α) | PA66 sheet | PEEK sheet |
| | melting point of (B1), Tc | | 260°C | 306°C | 260°C | 343°C |
| | glass transition temperature of (B1) | | 65°C | 160°C | 65°C | 143°C |
| | void fraction | | 66% | 66% | 66% | 66% |
| skin layer [II] | (A2) | reinforcing fiber | continuous fiber | continuous fiber | continuous fiber | continuous fiber |
| | (B2) | thermoplastic resin | PPS | PEEK | PPS | PEKK |
| | melting point of (B2), Ts | | 285°C | 343°C | 285°C | 306°C |
| | glass transition temperature of (B2) | | 93°C | 143°C | 93°C | 160°C |
| | type | | PPS prepreg | PEEK prepreg | PPS prepreg | PEKK prepreg α |
| melting | point difference \|Ts-Tc\| | | 25°C | 37°C | 25°C | 37°C |
| laminated structure | shape of member | | P (sandwich structure) | P (sandwich structure) | Q (bent portion of die) | P |
| | thickness ratio between void-containing body and skin layer, Hc/Hs | | 5 | 5 | 5 | 5 |
| | molding method | | press molding | press molding | press molding | autoclave |
| | overall specific gravity | | 0.38 | 0.38 | 0.38 | 0.39 |
| | bending strength | | 55 MPa | 62 MPa | 43 MPa | 46 MPa |
| | specific strength | | 145 MPa/(g/cm³) | 163 MPa/(g/cm³) | 113 MPa/(g/cm³) | 117 MPa/(g/cm³) |
| | average surface roughness | | 0.45 µm | 0.26 µm | 0.46 µm | 0.47 µm |

### [Table 1-2]

**[Table 1-2]**

| | | | Example 5 | Example 6 | Example 7 | Example 8 |
|---|---|---|---|---|---|---|
| void-containing body [I] | (A1) | reinforcing fiber | 6 mm mat | 6 mm mat | 6 mm mat | 6 mm mat |
| | (B1) | thermoplastic resin | PEEK sheet | PEEK sheet | PA66 sheet | PA66 sheet |
| | melting point of (B1), Tc | | 343°C | 343°C | 260°C | 260°C |
| | glass transition temperature of (B1) | | 143°C | 143°C | 65°C | 65°C |
| | void fraction | | 66% | 66% | 5% | 95% |
| skin layer [II] | (A2) | reinforcing fiber | continuous fiber | continuous fiber | continuous fiber | continuous fiber |
| | (B2) | thermoplastic resin | PEKK | PEKK | PPS | PPS |
| | melting point of (B2), Ts | | 306°C | 306°C | 285°C | 285°C |
| | glass transition temperature of (B2) | | 160°C | 160°C | 93°C | 93°C |
| | type | | PEKK prepreg α | PEKK prepreg α | PPS prepreg | PPS prepreg |
| melting | point difference \|Ts-Tc\| | | 37°C | 37°C | 25°C | 25°C |
| laminated structure | shape of member | | P | P | P | P |
| | thickness ratio between void-containing body and skin layer, Hc/Hs | | 5 | 3 | 5 | 5 |
| | molding method | | press molding | press molding | press molding | press molding |
| | overall specific gravity | | 0.39 | 0.49 | 1.1 | 0.11 |
| | bending strength | | 46 MPa | 47 MPa | 50 MPa | 12 MPa |
| | specific strength | | 117 MPa/(g/cm³) | 96 MPa/(g/cm³) | 45 MPa/(g/cm³) | 109 MPa/(g/cm³) |
| | average surface roughness | | 0.52 µm | 0.52 µm | 0.38 µm | 0.48 µm |
| | | | Comparative example 1 | Comparative example 2 | Comparative example 3 | |
| void-containing body [I] | (A1) | reinforcing fiber | 6 mm mat | 6 mm mat | 6 mm mat | |
| | (B1) | thermoplastic resin | PPS sheet | PEEK sheet | PEEK sheet | |
| | melting point of (B1), Tc | | 285°C | 343°C | 343°C | |
| | glass transition temperature of (B1) | | 93°C | 143°C | 143°C | |
| | void fraction | | 66% | 66% | 66% | |
| skin layer [II] | (A2) | reinforcing fiber | continuous fiber | continuous fiber | continuous fiber | |
| | (B2) | thermoplastic resin | PPS | PEKK | PEKK | |
| | melting point of (B2), Ts | | 285°C | 358°C | 358°C | |
| | glass transition temperature of (B2) | | 93°C | 165°C | 165°C | |
| | type | | PPS prepreg | PEKK prepreg (β) | PEKK prepreg (β) | |
| melting | point difference \|Ts-Tc\| | | 0°C | 15°C | 15°C | |
| laminated structure | shape of member | | P | P | Q (bent portion of die) | |
| | thickness ratio between void-containing body and skin layer, Hc/Hs | | 5 | 5 | 5 | |
| | molding method | | press molding | press molding | press molding | |
| | overall specific gravity | | 0.38 | 0.38 | 0.38 | |
| | bending strength | | 45 MPa | 52 MPa | 52 MPa | |
| | specific strength | | 118 MPa/(g/cm³) | 137 MPa/(g/cm³) | 137 MPa/(g/cm³) | |
| | average surface roughness | | 13.6 µm | 11.2 µm | 20.0 µm | |

In all Examples, there was a difference of 20°C or more between the melting point of the thermoplastic resin used for the void-containing body and that for the skin layer, and it served to perform a shaping step while maintaining only either the void-containing body or the skin layer in a molten state. Accordingly, the precursor of the void-containing body expanded in a phase where the skin layer does not flow during its molding phase and it enabled the production of a fiber reinforced resin structure with a good surface quality that had a bent portion with a surface roughness of 10 µm or less. In addition, in Examples 4 and 5, thermoplastic resins with glass transition temperatures of 120°C or more were used for the void-containing bodies, and it is obvious that the fiber reinforced resin structures produced in Examples 4 and 5 are superior to those produced in Examples 1 and 2 in terms of continuous use at high temperatures. In Example 6, the thickness of the void-containing body was reduced relative to the thickness of the skin layer, and as a result, the density increased, suggesting that it was possible to improve the specific strength by optimizing the thickness ratio. In Example 7 and Example 8, it was possible to expand and shape the precursor of the void-containing body while maintaining the skin layer in a solidified state, and this served to produce a fiber reinforced resin structure with a good appearance quality. It was suggested that the specific gravity and bending strength was able to be improved by optimizing the void fraction. In Example 9 and Example 10, skin layers were disposed on both sides of the void-containing body, and this served to produce a fiber reinforced resin structure that had an excellent surface quality with a further improved bending strength. In Example 11, the material was shaped into a form having a bent portion. Here, it was possible to expand and shape the precursor of the void-containing body while maintaining the skin layer in a solidified state, and this served to prevent the skin layer from flowing due to load concentration at the bent portion, enabling the production of a fiber reinforced resin structure having a good surface quality with a surface roughness of 10 µm or less in the bent portion. In Example 12, in which a laminate of a void-containing body and a skin layer was formed in an autoclave, it was possible to shape a skin layer while maintaining the void-containing body in a solidified state, and this enabled the production of a fiber reinforced resin structure having a good surface quality with a surface roughness of 10 µm or less. As compared with this, in Comparative example 1, the thermoplastic resin used for the void-containing body had the same melting point as that of the thermoplastic resin used for the skin layer. As a result, it was seen that the void-containing body and the skin layer flowed simultaneously during shaping, and this resulted in a skin layer having a surface roughness of 10 µm or more and, in turn, a fiber reinforced resin structure having an insufficient surface quality. In Comparative example 2, the difference in melting point between the thermoplastic resins was 15°C, and as a result, the effect of the present invention was not sufficiently exhibited, leading to a surface roughness as large as more than 10 µm. In Comparative example 3, the difference in melting point between the thermoplastic resins was 15°C, and as a result, the effect of the present invention was not sufficiently exhibited. In addition, load concentration occurred at the bent portion, resulting in a still larger surface roughness than in Comparative example 2.

### EXPLANATION OF NUMERALS

1. void-containing body
2. skin layer
b. cross section of void-containing body
3. reinforcing fiber (A1)
4. void
5. thermoplastic resin (B1)
6. bent portion
7. upper die
8. lower die
9. shape of fiber reinforced resin molding

## Claims

1. A fiber reinforced resin structure in the form of an integration of a void-containing body (I) including reinforcing fibers (A1) and a thermoplastic resin (B1) and a skin layer (II) including reinforcing fibers (A2) and a thermoplastic resin (B2), wherein both the melting point Tc (°C) of the thermoplastic resin (B1) and the melting point Ts (°C) of the thermoplastic resin (B2) are 230°C or more while Ts-Tc or Tc-Ts, namely, the difference between Tc (°C) and Ts (°C), is 20°C or more.

2. The fiber reinforced resin structure according to claim 1, wherein the skin layer (II) has an average surface roughness Ra of 10 µm or less as measured according to JIS B 0601 (2001).

3. The fiber reinforced resin structure according to claim 1, wherein the thermoplastic resin (B1) and the thermoplastic resin (B2) have glass transition temperatures of 120°C or more.

4. The fiber reinforced resin structure according to claim 1, wherein either of the melting point Tc (°C) and the melting point Ts (°C) is 270°C or more and 330°C or less.

5. The fiber reinforced resin structure according to claim 1, wherein both the thermoplastic resin (B1) and the thermoplastic resin (B2) are polyaryl ether ketone or polyaryl ether ketone copolymers.

6. The fiber reinforced resin structure according to claim 1, wherein the thermoplastic resin (B2) present in the skin layer (II) and the thermoplastic resin (B1) present in the void-containing body (I) have a boundary interface.

7. The fiber reinforced resin structure according to claim 1, wherein the thickness Hc of the void-containing body (I) and the thickness Hs of the skin layer (II) have a Hc/Hs ratio of 5 or more.

8. The fiber reinforced resin structure according to claim 1, wherein the void-containing body (I) has a void fraction of 10 vol% or more and 90 vol% or less.

9. The fiber reinforced resin structure according to claim 1, wherein the reinforcing fibers (A1) are discontinuous fibers having fiber lengths of 1 mm or more and 15 mm or less.

10. The fiber reinforced resin structure according to claim 1, wherein the reinforcing fibers (A1) are substantially in the form of monofilaments and are dispersed at random.

11. The fiber reinforced resin structure according to claim 1, wherein both the reinforcing fibers (A1) and the reinforcement fibers (A2) are carbon fibers.

12. The fiber reinforced resin structure according to claim 1, wherein the reinforcing fibers (A2) are unidirectional continuous fibers.

13. The fiber reinforced resin structure according to claim 1, having a sandwich structure including the skin layer (II) on each side of the void-containing body (I).

14. The fiber reinforced resin structure according to claim 1, wherein the skin layer (II) has at least one bent portion.

15. An aviation member selected from the group consisting of airplanes, artificial satellites, urban air mobilities (UAMs), and drones that include the fiber reinforced resin structure according to claim 1.

16. A production method for a fiber reinforced resin structure in the form of an integration of a void-containing body (I) including reinforcing fibers (A1) and a thermoplastic resin (B1) and a skin layer (II) including reinforcing fibers (A2) and a thermoplastic resin (B2), wherein both the melting point Tc (°C) of the thermoplastic resin (B1) and the melting point Ts (°C) of the thermoplastic resin (B2) are 230°C or more while Ts - Tc, namely, the difference between Tc (°C) and Ts (°C), is 20 (°C) or more, comprising:
step 1 for combining
a precursor (i) of the void-containing body (I) that includes a nonwoven fabric of reinforcing fibers (A1) and a thermoplastic resin (B1), and
a prepreg that includes reinforcing fibers (A2) and a thermoplastic resin (B2),
and placing them in a molding die;
step 2 for heating and melting both the thermoplastic resin (B1) and the thermoplastic resin (B2) at a temperature higher than Ts to join together and shape the precursor (i) of the void-containing body (I) and the skin layer (II);
step 3 for cooling to a temperature higher than Tc and lower than Ts to solidify the skin layer (II);
step 4 for, while maintaining a temperature higher than Tc and lower than Ts, releasing the pressure to expand the precursor (i) of the void-containing body (I); and
step 5 for cooling to a temperature lower than Tc to solidify the void-containing body (I);
thereby completing the production of a fiber reinforced resin structure.

17. A production method for a fiber reinforced resin structure in the form of an integration of a void-containing body (I) including reinforcing fibers (A1) and a thermoplastic resin (B1) and a skin layer (II) including reinforcing fibers (A2) and a thermoplastic resin (B2), wherein both the melting point Tc (°C) of the thermoplastic resin (B1) and the melting point Ts (°C) of the thermoplastic resin (B2) are 230°C or more while Tc - Ts, namely, the difference between Tc (°C) and Ts (°C), is 20 (°C) or more, comprising:
step 1 for combining
a precursor (i) of the void-containing body (I) that includes a nonwoven fabric of reinforcing fibers (A1) and a thermoplastic resin (B1), and
a prepreg including reinforcing fibers (A2) and a thermoplastic resin (B2),
and placing them in a molding die;
step 2 for heating and melting both the thermoplastic resin (B1) and the thermoplastic resin (B2) at a temperature higher than Tc to join together the precursor (i) of the void-containing body (I) and the skin layer (II);
step 3 for, while maintaining a temperature higher than Tc, releasing the pressure to expand the precursor (i) of the void-containing body (I); and
step 4 for cooling to a temperature higher than Ts and lower than Tc to solidify the expanded void-containing body (I);
step 5 for, while maintaining a temperature higher than Ts and lower than Tc, applying a pressure to cause the skin layer (II) to flow; and
step 6 for cooling to a temperature lower than Ts to solidify the skin layer (II);
thereby completing the production of a fiber reinforced resin structure.

18. A production method for a fiber reinforced resin structure in the form of an integration of a void-containing body (I) including reinforcing fibers (A1) and a thermoplastic resin (B1) and a skin layer (II) including reinforcing fibers (A2) and a thermoplastic resin (B2), wherein both the melting point Tc (°C) of the thermoplastic resin (B1) and the melting point Ts (°C) of the thermoplastic resin (B2) are 230°C or more while Tc - Ts, namely, the difference between Tc (°C) and Ts (°C), is 20 (°C) or more, comprising:
a step for combining
a void-containing body (I) that includes reinforcing fibers (A1) and a thermoplastic resin (B1), and
a prepreg including reinforcing fibers (A2) and a thermoplastic resin (B2),
and placing them in an autoclave;
wherein the molding temperature is always not higher than the melting point Tc of the thermoplastic resin (B1).
